# EUROPEAN PATENT APPLICATION

(11) **EP 4 366 246 A1**
(43) Date of publication of application: **08.05.2024**
(21) Application number: 22833684.8
(22) Date of filing: 30.06.2022
(51) Int. Cl.: H04L 12/40, H04L 12/66, G06F 9/455, H04L 41/40

(54) **COMMUNICATION DEVICE FOR VEHICLE, AND VEHICLE HAVING SAME**

(30) Priority: 01.07.2021 KR 20210086549
(71) Applicant: LG Electronics Inc., Yeongdeungpo-gu Seoul 07336 (KR)
(72) Inventor: KIM, Taekyoung, Seoul 06772 (KR); CHO, Chaeguk, Seoul 06772 (KR); SUNG, Changhun, Seoul 06772 (KR); JANG, Sehoon, Seoul 06772 (KR); KIM, Hansung, Seoul 06772 (KR); KIM, Younggon, Seoul 06772 (KR); CHOI, Jooyoung, Seoul 06772 (KR); PARK, Junsang, Seoul 06772 (KR); KIM, Youngjae, Seoul 06772 (KR); CHO, Jaejin, Seoul 06772 (KR)
(74) Representative: Vossius & Partner Patentanwälte Rechtsanwälte mbB
(86) International application number: PCT/KR2022/009466
(87) International publication number: WO 2023/277631

(57) **Abstract**

The present disclosure relates to a vehicle communication device and a vehicle including the same. The vehicle communication device and the vehicle including the same according to an embodiment of the present disclosure include: a gateway configured to perform data communication with a plurality of electronic control devices, based on a first communication scheme; and a service orchestrator configured to transmit data provided by a first zone electronic control device, which is a service provider, among the plurality of zone electronic control devices to a second zone electronic control device, which is a service consumer, thereby dynamically controlling data that may be provided between the plurality of electronic control devices.

## Description

### BACKGROUND

### 1. Technical Field

The present disclosure relates to a vehicle communication device and a vehicle including the same, and more particularly to a vehicle communication device capable of dynamically controlling data that may be provided between a plurality of electronic control devices, and a vehicle including the vehicle communication device.

### 2. Description of the Related Art

A vehicle is a machine that allows a user to move in a desired direction. A typical example of the vehicle is a car.

Meanwhile, a plurality of sensor devices and electronic control devices are mounted at various positions in the vehicle for the convenience of a user of the vehicle.

Meanwhile, it is preferred to use a vehicle communication device, and provide services via the plurality of electronic control devices.

U.S. Patent No. US10055260 (hereinafter referred to as a related art) discloses a vehicle communication device including a Service Oriented Architecture (SOA) server, and provide services via the plurality of electronic control devices.

However, in the related art, a plurality of network servers separately run operating systems or SOA servers, such that every time a service is added or changed, it is cumbersome for each SOA server to redefine the service and to update software.

In addition, the related art has a drawback in that data, which can be provided by the plurality of electronic control devices, may not be transmitted smoothly due to network collision and the like.

### SUMMARY

It is an objective of the present disclosure, and provides a vehicle communication device capable of dynamically controlling data that may be provided between a plurality of electronic control devices, and a vehicle including the vehicle communication device.

Meanwhile, it is another objective of the present disclosure, and provides a vehicle communication device capable of stably providing data by using configuration files, and a vehicle including the vehicle communication device.

Meanwhile, it is further another objective of the present disclosure, and provides a vehicle communication device capable of providing simple management of network configuration between a plurality of electronic control devices, and a vehicle including the vehicle communication device.

Meanwhile, it is further another objective of the present disclosure, and provides a vehicle communication device capable of providing services without having to redefine the services or to add or change software, and a vehicle including the vehicle communication device.

In accordance with an aspect of the present disclosure, the above and other objectives can be accomplished by providing a vehicle communication device and a vehicle including the same, which include: a gateway configured to perform data communication with a plurality of electronic control devices, based on a first communication scheme; and a service orchestrator configured to transmit data provided by a first zone electronic control device, which is a service provider, among the plurality of zone electronic control devices to a second zone electronic control device, which is a service consumer.

Meanwhile, in response to receiving a necessary service list from a first electronic control device and an available service list from a plurality of electronic control devices, the service orchestrator may be configured to transmit a service, provided by any one of the plurality of electronic control devices, to the first electronic control device.

Meanwhile, the service orchestrator may be configured to transmit a first configuration file to the first electronic control device and transmit a second configuration file to any one of the plurality of electronic control devices.

Meanwhile, in response to a service, provided by any one of the electronic control devices, being terminated, the service orchestrator may be configured to transmit a service, provided by another one of the plurality of electronic control devices, to the first electronic control device.

Meanwhile, in response to receiving a request for information from the first electronic control device connected to the first zone electronic control device, and receiving information from the second electronic control device connected to the second zone electronic control device, the service orchestrator may be configured to transmit endpoint information to the first electronic control device.

Meanwhile, the service orchestrator may include a Service Oriented Architecture (SOA) converter configured to transmit the endpoint information in a configuration file format or in a stream format.

Meanwhile, the first electronic control device may be configured to directly receive the information based on the endpoint information.

Meanwhile, the service orchestrator may be configured to monitor whether the second electronic control device periodically provides the information or data to the first electronic control device.

Meanwhile, the information may include vehicle speed data or camera data.

Meanwhile, the second zone electronic control device may be configured to process information received from the second electronic control device and transmit the processed information to the first electronic control device.

Meanwhile, the second electronic control device may be configured to receive the information from a sensor device based on a second communication scheme, and transmit the received information to the second zone electronic control device based on the first communication scheme which is faster than the second communication scheme, wherein the second zone electronic control device may be configured to transmit the received information to the gateway based on the first communication scheme.

Meanwhile, the gateway may perform data communication with a cloud or server based on a third communication scheme which is a wireless communication scheme and is different from the first and second communication schemes which are wired communication schemes.

Meanwhile, the service orchestrator may be configured to manage network configuration for the plurality of zone electronic control devices.

Meanwhile, the service orchestrator: may be configured to dynamically control services which are necessary or available between the service provider and the service consumer in the plurality of zone electronic control devices; or scan and adjust all services within a network domain, and provide a new or changed service.

Meanwhile, in response to receiving vehicle speed data from the second electronic control device connected to the second zone electronic control device, and receiving a request for the vehicle speed data from the first electronic control device connected to the first zone electronic control device, the service orchestrator may be configured to transmit the endpoint information to the first electronic control device.

Meanwhile, in response to receiving camera data, radar data, or lidar data from the second electronic control device connected to the second zone electronic control device, and receiving a request for the camera data, radar data, or lidar data from the first electronic control device connected to the first zone electronic control device, the service orchestrator may be configured to transmit the endpoint information to the first electronic control device.

### EFFECTS OF THE INVENTION

A vehicle communication device and a vehicle including the same according to an embodiment of the present disclosure include: a gateway configured to perform data communication with a plurality of zone Electronic control devices based on a first communication scheme; and a service orchestrator configured to transmit data provided by a first zone electronic control device, which is a service provider, among the plurality of zone electronic control devices to a second zone electronic control device, which is a service consumer. Accordingly, data that may be provided between a plurality of electronic control devices may be dynamically controlled. Further, services may be provided without having to redefine the services or to add or change software.

Meanwhile, in response to receiving a necessary service list from a first electronic control device and an available service list from a plurality of electronic control devices, the service orchestrator may transmit a service, provided by any one of the plurality of electronic control devices, to the first electronic control device. Accordingly, data that may be provided between the plurality of electronic control devices may be dynamically controlled.

Meanwhile, the service orchestrator may transmit a first configuration file to the first electronic control device and to transmit a second configuration file to any one of the plurality of electronic control devices, thereby stably providing data by using the configuration files.

Meanwhile, in response to a service, provided by any one of the electronic control devices, being terminated, the service orchestrator may transmit a service, provided by another one of the plurality of electronic control devices, to the first electronic control device. Accordingly, data that may be provided between the plurality of electronic control devices may be dynamically controlled.

Meanwhile, in response to receiving information from the second electronic control device connected to the second zone electronic control device, and receiving a request for information from the first electronic control device connected to the first zone electronic control device, the service orchestrator may transmit endpoint information to the first electronic control device. Accordingly, data that may be provided between the plurality of electronic control devices may be dynamically controlled.

Meanwhile, the service orchestrator may include a Service Oriented Architecture (SOA) converter configured to transmit the endpoint information in a configuration file format or in a stream format, thereby stably providing data by using the configuration files.

Meanwhile, the first electronic control device may directly receive the information based on the endpoint information. Accordingly, data that may be provided between the plurality of electronic control devices may be dynamically controlled.

Meanwhile, the service orchestrator may monitor whether the second electronic control device periodically provides the information or data to the first electronic control device. Accordingly, data that may be provided between the plurality of electronic control devices may be dynamically controlled.

Meanwhile, the information may include vehicle speed data or camera data. Accordingly, data that may be provided between the plurality of electronic control devices may be dynamically controlled.

Meanwhile, the second zone electronic control device may process information received from the second electronic control device and may transmit the processed information to the first electronic control device. Accordingly, data that may be provided between the plurality of electronic control devices may be dynamically controlled.

Meanwhile, the second electronic control device may receive the information from a sensor device based on a second communication scheme, and may be configured to transmit the received information to the second zone electronic control device based on the first communication scheme which is faster than the second communication scheme, wherein the second zone electronic control device may be configured to transmit the received information to the gateway based on the first communication scheme. Accordingly, data that may be provided between the plurality of electronic control devices may be dynamically controlled.

Meanwhile, the gateway may perform data communication with a cloud or server based on a third communication scheme which is a wireless communication scheme and is different from the first and second communication schemes which are wired communication schemes. Accordingly, data that may be provided between the plurality of electronic control devices may be dynamically controlled.

Meanwhile, the service orchestrator may be configured to manage network configuration for the plurality of zone Electronic control devices, thereby allowing for simple management of network configuration between the plurality of electronic control devices.

Meanwhile, the service orchestrator: may be configured to dynamically control services which are necessary or available between the service provider and the service consumer in the plurality of zone electronic control devices; or may be configured to scan and adjust all services within a network domain, and provide a new or changed service. Accordingly, data that may be provided between the plurality of electronic control devices may be dynamically controlled. Further, services may be provided without having to redefine the services or to add or change software.

Meanwhile, in response to receiving vehicle speed data from the second electronic control device connected to the second zone electronic control device, and receiving a request for the vehicle speed data from the first electronic control device connected to the first zone electronic control device, the service orchestrator may be configured to transmit the endpoint information to the first electronic control device. Accordingly, data that may be provided between the plurality of electronic control devices may be dynamically controlled.

Meanwhile, in response to receiving camera data, radar data, or lidar data from the second electronic control device connected to the second zone electronic control device, and receiving a request for the camera data, radar data, or lidar data from the first electronic control device connected to the first zone electronic control device, the service orchestrator may be configured to transmit the endpoint information to the first electronic control device. Accordingly, data that may be provided between the plurality of electronic control devices may be dynamically controlled.

### BRIEF DESCRIPTION OF THE DRAWINGS

FIG. 1 is a view showing an example of the exterior and interior of a vehicle;
FIG. 2A is a diagram illustrating the arrangement of a vehicle communication device in a vehicle associated with the present disclosure;
FIG. 2B is a diagram referred to in the description of FIG. 2A;
FIG. 3A is a diagram illustrating the arrangement of a vehicle communication device in a vehicle according to an embodiment of the present disclosure;
FIGS. 3B to 4B are diagrams referred to in the description of FIG. 3A;
FIG. 5A is a diagram illustrating an example of the interior of a vehicle;
FIGS. 5B is a diagram illustrating the exterior of a vehicle display apparatus associated with FIG. 5A;
FIG. 6 is an internal block diagram illustrating the vehicle display apparatus of FIG. 5B;
FIG. 7A is a diagram illustrating an example of a system operating on a vehicle communication device in a vehicle associated with the present disclosure;
FIGS. 7B to 7D are diagrams referred to in the description of FIG. 7A;
FIG. 8 is a block diagram illustrating a vehicle communication device according to an embodiment of the present disclosure; and
FIGS. 9A to 11D are diagrams referred to in the description of FIG. 8.

### DETAILED DESCRIPTION

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" may be used interchangeably.

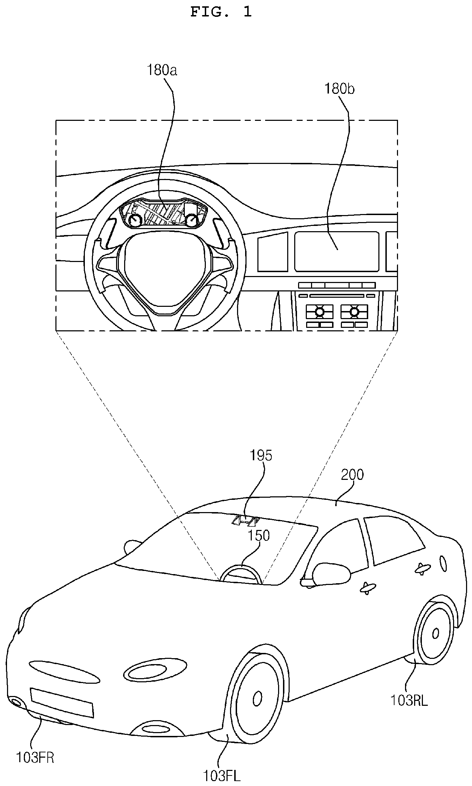

FIG. 1 is a view showing an example of the exterior and interior of a vehicle.

Referring to the figure, the vehicle 200 is moved by a plurality of wheels 103FR, 103FL, 103RL,... rotated by a power source and a steering wheel 150 configured to adjust an advancing direction of the vehicle 200.

Meanwhile, the vehicle 200 may be provided with a camera 195 configured to acquire an image of the front of the vehicle.

Meanwhile, the vehicle 200 may be further provided therein with a plurality of displays 180a and 180b configured to display images and information.

In FIG. 1, a cluster display 180a and an audio video navigation (AVN) display 180b are illustrated as the plurality of displays 180a and 180b. In addition, a head up display (HUD) may also be used.

Meanwhile, the audio video navigation (AVN) display 180b may also be called a center information display.

Meanwhile, the vehicle 200 described in this specification may be a concept including all of a vehicle having an engine as a power source, a hybrid vehicle having an engine and an electric motor as a power source, and an electric vehicle having an electric motor as a power source.

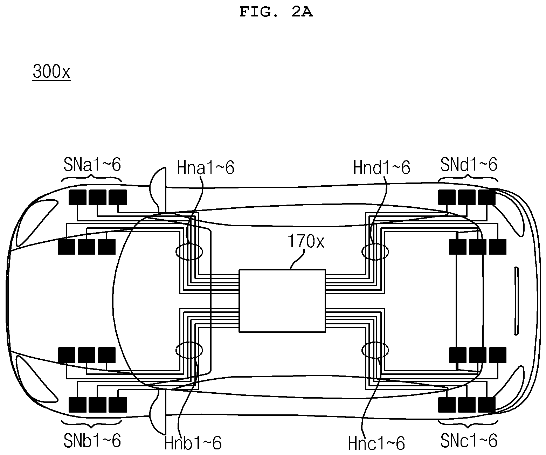

FIG. 2A is a diagram illustrating the arrangement of a vehicle communication device in a vehicle associated with the present disclosure.

Referring to the drawing, a vehicle communication device 300x in a vehicle associated with the present disclosure may include a signal processing device 170x for receiving signals from a plurality of sensor devices SNa1 to SNd6 mounted in a vehicle 200.

In the drawing, an example is illustrated in which, among the plurality of sensor devices SNa1 to SNd6, sensor devices SNa1 to SNa6 in a first region at the right front side in the vehicle, sensor devices SNb1 to SNb6 in a second region at the left front side in the vehicle, sensor devices SNc1 to SNc6 in a third region at the left rear side in the vehicle, and sensor device SNd1 to SNd6 in a fourth region at the right rear side in the vehicle.

Meanwhile, in the vehicle communication device 300x of FIG. 2A in the vehicle, wiring harnesses HNa1 to HNd6 are disposed between the plurality of sensor devices SNa1 to SNd6 and the signal processing device 170x, for signal transmission from the plurality of sensor devices SNa1 to SNd6.

In the drawing, an example is illustrated in which the wiring harnesses HNa1 to HNa6 are connected to the sensor devices SNa1 to SNa6 in the first region at the right front side in the vehicle, the wiring harnesses HNb1 to HNb6 are connected to the sensor devices SNb1 to SNb6 in the second region at the left front side in the vehicle, the wiring harnesses HNc1 to HNc6 are connected to the sensor devices SNc1 to SNc6 in the third region at the left rear side in the vehicle, and the wiring harnesses HNd1 to HNd6 are connected to the sensor devices SNd1 to SNd6 in the fourth region at the right rear side in the vehicle.

However, the arrangement has a problem in that as the number of sensor devices increases, the wiring harnesses HNa1 to HNd6 increase in length, such that the wiring becomes complicated, and the like.

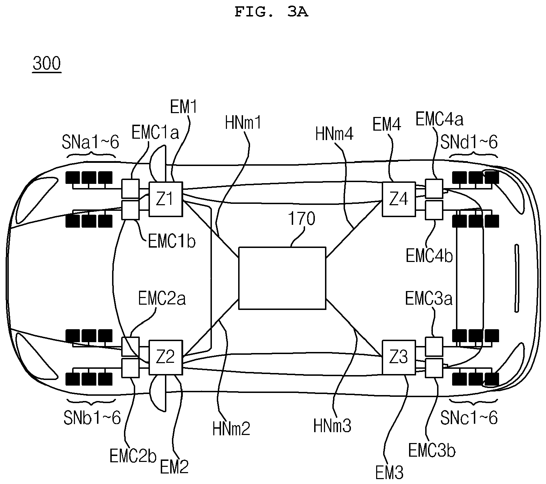

Accordingly, embodiments of the present disclosure provide a method of simplifying the wiring harnesses by reducing the length of the wiring harnesses and the like, which will be described below with reference to FIG. 3A and the following figures.

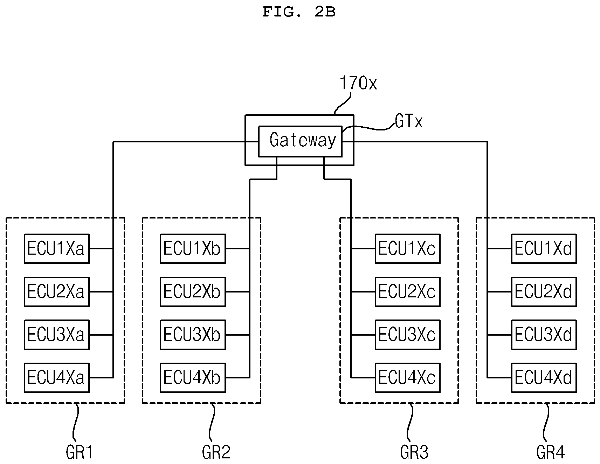

FIG. 2B is a diagram referred to in the description of FIG. 2A.

Referring to the drawing, the signal processing device 170x in the vehicle communication device 300x of the vehicle associated with the present disclosure may include a gateway GTx communicating with a plurality of electronic control devices disposed in a plurality of regions GR1 to GR4.

The gateway GTx may communicate with a plurality of electronic control devices ECU1Xa to ECU4Xa disposed in the first region GR1, may communicate with a plurality of electronic control devices ECU1Xb to ECU4Xb disposed in the second region GR2, may communicate with a plurality of electronic control devices ECU1Xc to ECU4Xc disposed in the third region GR3, or may communicate with a plurality of electronic control devices ECU1Xd to ECU4Xd disposed in the fourth region GR4.

In the method, the plurality of electronic control devices are connected in parallel with each other in the respective regions, such that the network configuration for data communication with the gateway GTx may become complicated.

FIG. 3A is a diagram illustrating the arrangement of a vehicle communication device in a vehicle according to an embodiment of the present disclosure.

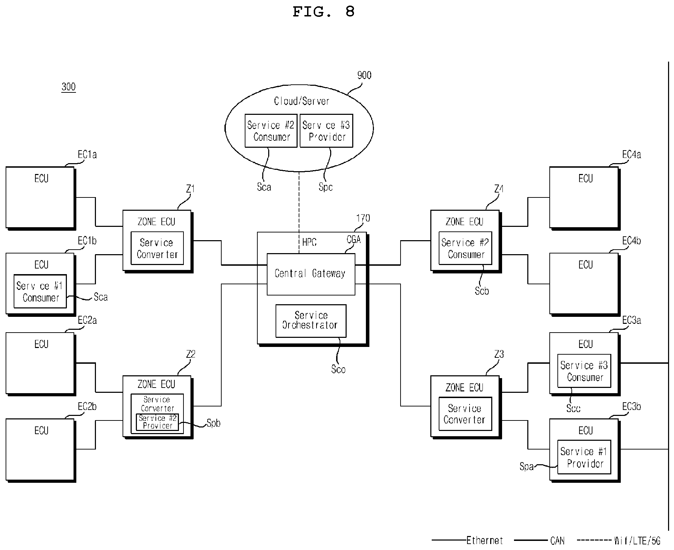

Referring to the drawing, a vehicle communication device 300 according to an embodiment of the present disclosure may include a signal processing device 170 including a gateway CGA (see FIG. 8) that performs data communication with a plurality of zone Electronic control devices Z1 to Z4, disposed in each of the plurality of regions of the vehicle 200, based on a first communication scheme.

The gateway CGA (see FIG. 8) in the drawing may be a central gateway.

Meanwhile, the plurality of zone Electronic control devices Z1 to Z4 and EM1 to EM4 may be connected to the plurality of electronic control devices.

In the drawing, an example is illustrated in which each of the zone Electronic control devices Z1 to Z4 and EM1 to EM4 are connected to two Electronic control devices EMC1a to EMC4b.

Meanwhile, the plurality of electronic control devices EMC1a to EMC4b may receive signals from the sensor devices SNa1 to SNd6 disposed in each of the plurality of regions, and may transmit at least part of the received signals to the signal processing device 170 via the zone Electronic control devices Z1 to Z4 and EM1 to EM4.

Meanwhile, among the plurality of zone Electronic control devices EM1 to EM4, a first zone electronic control device EM1 may receive sensing signals from the sensor devices SNa1 to SNa6 disposed in the first region of the vehicle 200 and may transmit the sensing signals to the signal processing device 170, a second zone electronic control device EM2 may receive sensing signals from the sensor devices SNb1 to SNb6 disposed in the second region of the vehicle 200 and may transmit the sensing signals to the signal processing device 170, a third zone electronic control device EM3 may receive sensing signals from the sensor devices SNc1 to SNc6 disposed in the third region of the vehicle 200 and may transmit the sensing signals to the signal processing device 170, and a fourth zone electronic control device EM4 may receive sensing signals from the sensor devices SNd1 to SNd6 disposed in the fourth region of the vehicle 200 and may transmit the sensing signals to the signal processing device 170.

Meanwhile, the first zone electronic control device EM1 disposed at the right front side in the vehicle may perform data communication with the signal processing device 170 via the wiring harness HNm1 based on the first communication scheme, the second zone electronic control device EM2 disposed at the left front side in the vehicle may perform data communication with the signal processing device 170 via the wiring harness HNm2 based on the first communication scheme, the third zone electronic control device EM3 disposed at the left rear side in the vehicle may perform data communication with the signal processing device 170 via the wiring harness HNm3 based on the first communication scheme, and the fourth zone electronic control device EM4 disposed at the right rear side in the vehicle may perform data communication with the signal processing device 170 via the wiring harness HNm4 based on the first communication scheme.

In the vehicle communication device 300 of FIG. 3A, the plurality of sensor devices SNa1 to SNd6 are divided into four regions or zones, and each of the zone Electronic control devices Z1 to Z4 are disposed in each of the plurality of regions or zones, and the wiring harnesses are disposed between each of the zone Electronic control devices Z1 to Z4 and the signal processing device 170, thereby reducing the number of wiring harnesses and the length of wiring compared to FIG. 2A.

That is, the wiring harnesses disposed between the plurality of sensor devices SNa1 to SNd6 and the signal processing device 170 may be simplified. Further, efficient and stable data transmission may be provided.

Meanwhile, the plurality of sensor devices SNa1 to SNd6 may include a camera, a lidar sensor, a radar sensor, or a position sensor, thereby transmitting signals from various types of sensor devices to the signal processing device 170 in an efficient and stable manner.

Meanwhile, each of the zone Electronic control devices EM1 to EM4 may output a vehicle control signal including door control and seat control during driving of the vehicle 200. Accordingly, the vehicle may be controlled through the respective zone Electronic control devices EM1 to EM4.

Meanwhile, the respective zone Electronic control devices EM1 to EM4 may transmit signals from the sensor devices SNa1 to SNd6, disposed in the respective regions of the vehicle 200, to the signal processing device 170, thereby enabling efficient and stable data communication.

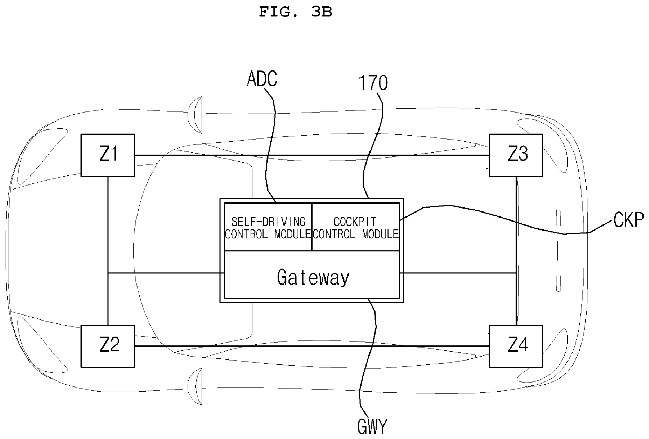

FIGS. 3B to 4B are diagrams referred to in the description of FIG. 3A.

First, FIG. 3B illustrates an architecture of a vehicle communication device 300a according to an embodiment of the present disclosure.

Referring to the drawing, the architecture of the vehicle communication device 300a according to an embodiment of the present disclosure may correspond to a zone-based architecture.

Accordingly, the plurality of zone Electronic control devices EM1 to EM4, connected with the plurality of sensor devices SNa1 to SNd6, may be disposed in the plurality of zones Z1 to Z4, and the signal processing device 170 including a vehicle communication gateway GWY may be disposed at the center of the plurality of zones Z1 to Z4.

Meanwhile, the signal processing device 170 may further include an autonomous driving (self-driving) control module ADC, a cockpit control module CKP, etc., in addition to the vehicle communication gateway GWY.

The vehicle communication gateway GWY in the signal processing device 170 may be a High Performance Computing (HPC) gateway.

That is, as an integrated HPC gateway, the signal processing device 170 of FIG. 3B may exchange data with an external communication module (not shown) or the plurality of zone Electronic control devices EM1 to EM4 in the plurality of zones Z1 to Z4 based on the first communication scheme. Here, the first communication scheme may be Ethernet communication.

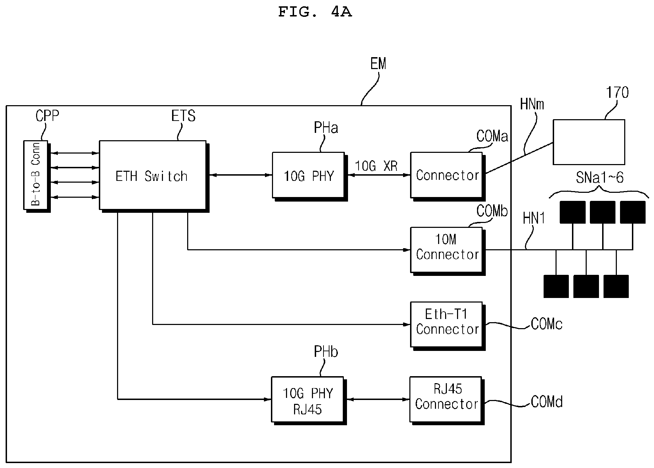

Next, FIG. 4A is an internal block diagram of each of the zone Electronic control devices of FIG. 3A.

Each zone electronic control device EM according to an embodiment of the present disclosure may include a first connector COMa configured to receive signals from some of the plurality of sensor devices SNa1 to SNd6 at a first communication speed, a second connector COMb configured to communicate with the signal processing device 170 at a second communication speed which is faster than the first communication speed, and an Ethernet switch ETS disposed between the first connector COMa and the second connector COMb and configured to perform switching.

As described above, by providing the plurality of zone Electronic control devices EM1 to EM4 in the respective zones, wiring harnesses disposed between the plurality of sensor devices SNa1 to SNd6 and the signal processing device 170 may be simplified. In addition, efficient and stable data communication may be provided by using the Ethernet communication which is a common communication protocol.

Meanwhile, the Ethernet switch ETS allows 10M to 10G communication and may use a multi-connector.

For example, the Ethernet switch ETS may implement PCIe communication for data communication with the signal processing device 170.

Meanwhile, the Ethernet switch ETS may implement 10Base-T1S communication for data communication with the respective sensor devices.

Meanwhile, the first connector COMa may perform serial communication, and the second connector COMb may perform parallel communication, thereby enabling efficient and stable data communication.

For example, the first connector COMa may be a high-speed connector for 10GBase-T1 Ethernet communication. Accordingly, 10GHz physical layer converter PHa may be disposed between the first connector COMa and the Ethernet switch ETS.

Meanwhile, the second connector COMb may implement 10Base-T1S data communication.

Meanwhile, the respective zone Electronic control devices EM1 to EM4 may further include a third connector COMc for 1000Base-T1 and 100Base-T1 communication, and a fourth connector COMd for 1000Base-T1 communication. Accordingly, a physical layer converter PHb may be disposed between the fourth connector COMd and the Ethernet switch ETS.

Meanwhile, the respective zone Electronic control devices EM1 to EM4 may further include a processor CPP electrically connected to the Ethernet switch ETS.

The processor CPP may process signals from the sensor devices SNa1 to SNd6 disposed in each of the plurality of zones of the vehicle 200, and may transmit the processed signals to the signal processing device 170 through the second connector COMb.

Meanwhile, the processor CPP may have a lower processing speed or a lower processing capacity than the signal processing device 170.

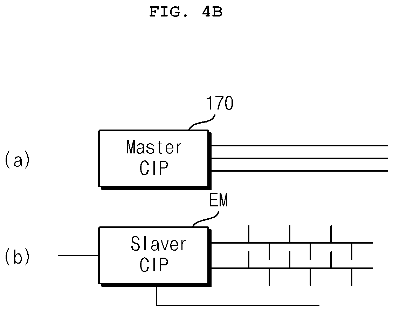

FIG. 4B is a diagram illustrating a communication method of a master Ethernet device and a slave Ethernet device.

Referring to the drawing, an example is illustrated in which the signal processing device 170 acts as a master Ethernet device, and the ECU EM acts as a slave Ethernet device.

The signal processing device 170 acting as the master Ethernet device may perform serial communication with the ECU EM, and the ECU EM acting as the slave Ethernet device may perform parallel communication with the respective sensor devices, thereby enabling efficient ad stable data communication.

Meanwhile, the signal processing device 170 may include an Ethernet switch ETS operating at the second communication speed.

Meanwhile, the Ethernet switch ETS in the respective Electronic control devices EM1 to EM4 may perform communication at the first communication speed or at the second communication speed which is faster than the first communication speed.

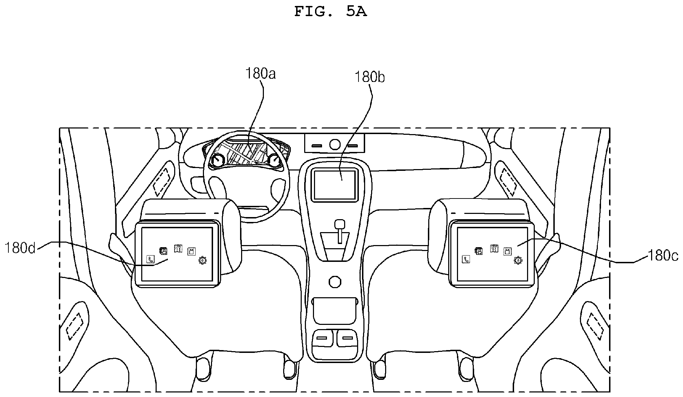

FIG. 5A is a diagram illustrating an example of the interior of a vehicle.

Referring to the drawing, a cluster display 180a, an audio video navigation (AVN) display 180b, rear seat entertainment displays 180c and 180d, a rear-view mirror display (not shown), and the like may be mounted in the vehicle.

In a vehicle display apparatus 100 including the plurality of displays 180a to 180d, the same image may be displayed in a synchronized manner on the plurality of displays 180a to 180d.

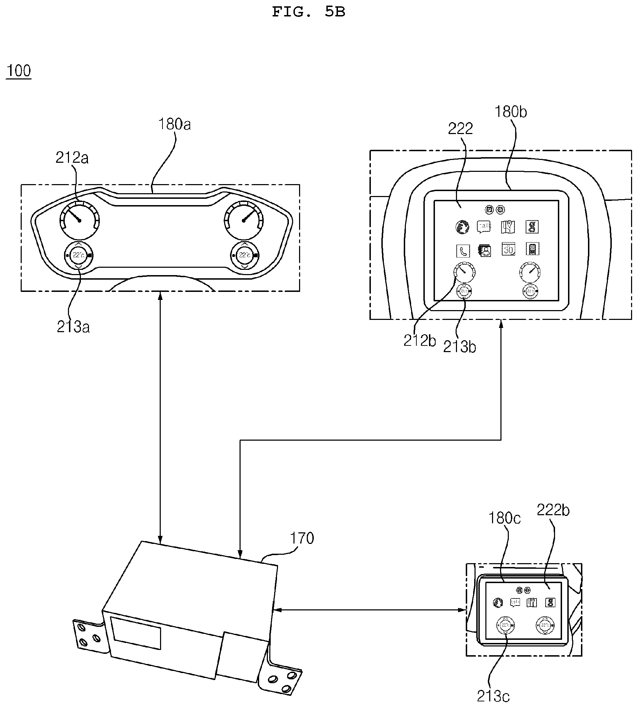

FIGS. 5B is a diagram illustrating the exterior of a vehicle display apparatus associated with FIG. 5A.

Referring to the drawing, the vehicle display apparatus 100 according to the embodiment of the present disclosure may include the plurality of displays 180a and 180b and the signal processing device 170 configured to perform signal processing in order to display images and information on the plurality of displays 180a and 180b.

The first display 180a, which is one of the plurality of displays 180a and 180b, may be a cluster display 180a configured to display a driving state and operation information, and the second display 180b may be an audio video navigation (AVN) display 180b configured to display vehicle driving information, a navigation map, various kinds of entertainment information, or an image.

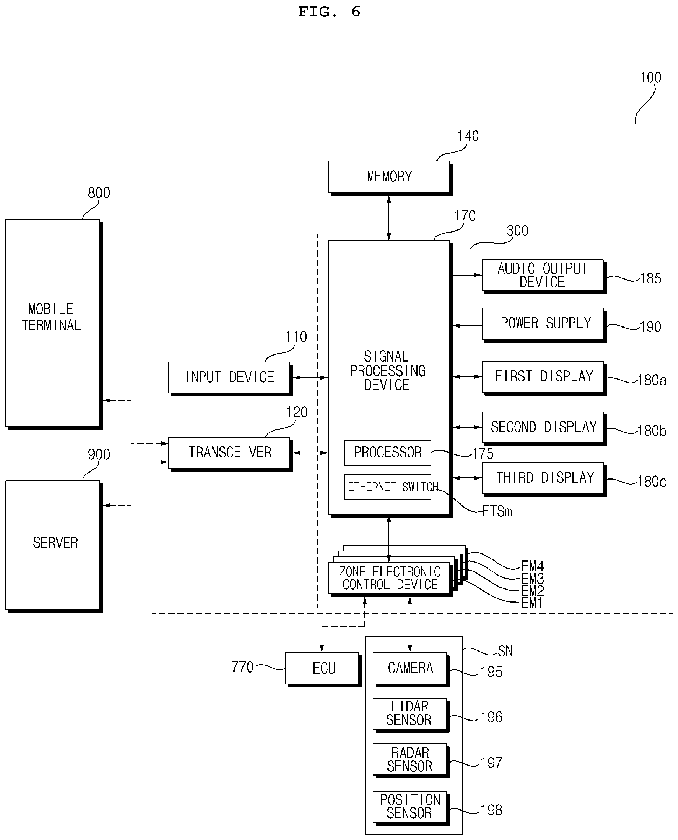

The signal processing device 170 may have a processor 175 (see FIG. 6) provided therein, and first to third virtual machines (not shown) may run on a hypervisor (not shown) in the processor 175.

The second virtual machine (not shown) may operate for the first display 180a, and the third virtual machine (not shown) may operate for the second display 180b.

Meanwhile, the first virtual machine (not shown) in the processor 175 may be configured to set a shared memory (not shown) based on the hypervisor (not shown) for transmitting the same data to the second virtual machine (not shown) and the third virtual machine (not shown). Consequently, the first display 180a and the second display 180b in the vehicle may display the same information or the same images in a synchronized state.

Meanwhile, the first virtual machine (not shown) in the processor 175 shares at least some of data with the second virtual machine (not shown) and the third virtual machine (not shown) for divided processing of data. Consequently, the plurality of virtual machines for the plurality of displays in the vehicle may divide and process data.

Meanwhile, the first virtual machine (not shown) in the processor 175 may receive and process wheel speed sensor data of the vehicle, and may transmit the processed wheel speed sensor data to at least one of the second virtual machine (not shown) or the third virtual machine (not shown). Consequently, at least one virtual machine may share the wheel speed sensor data of the vehicle.

Meanwhile, the vehicle display apparatus 100 according to the embodiment of the present disclosure may further include a rear seat entertainment (RSE) display 180c configured to display driving state information, simple navigation information, various kinds of entertainment information, or an image.

The signal processing device 170 may further execute a fourth virtual machine (not shown), in addition to the first to third virtual machines (not shown), on the hypervisor 505 in the processor 175 to control the RSE display 180c.

Consequently, it is possible to control various displays 180a to 180c using a single signal processing device 170.

Meanwhile, some of the plurality of displays 180a to 180c may be operated based on a Linux Operating System (OS), and others may be operated based on a Web Operating System (OS).

Meanwhile, the signal processing device 170 according to the embodiment of the present disclosure may also control the displays 180a to 180c, operating under various operating systems (OS), to display the same information or the same image in a synchronized manner.

Meanwhile, FIG. 5B illustrates an example in which a vehicle speed indicator 212a and an in-vehicle temperature indicator 213a are displayed on the first display 180a, a home screen 222 including a plurality of applications, a vehicle speed indicator 212b, and an in-vehicle temperature indicator 213b is displayed on the second display 180b, and a second home screen 222b including a plurality of applications and an in-vehicle temperature indicator 213c is displayed on the third display 180c.

FIG. 6 is an internal block diagram illustrating the vehicle display apparatus of FIG. 5B.

Referring to the drawing, the vehicle display apparatus 100 may include an input device 110, a transceiver 120 for communication with an external device, the plurality of zone Electronic control devices EM1 to EM4 for internal communication, a memory 140, the signal processing device 170, the plurality of displays 180a to 180c, an audio output device 185, and a power supply 190.

Meanwhile, the vehicle communication device 300 according to an embodiment of the present disclosure includes a plurality of zone Electronic control devices EM1 to EM4 and the signal processing device 170.

The signal processing device 170 may include an Ethernet switch ETSm provided therein for data communication with the respective zone Electronic control devices EM1 to EM4.

The Ethernet switch ETS in the respective zone Electronic control devices EM1 to EM4 may act as a slave Ethernet device based on the first communication speed or the second communication speed, and the Ethernet switch ETSm in the signal processing device 170 may act as a mater Ethernet device based on the second communication speed.

The respective zone Electronic control devices EM1 to EM4 may perform data communication with the plurality of sensor devices SNa1 to SNd6.

Meanwhile, the plurality of sensor device SNa1 to SNd6 may include a camera 195, a lidar sensor 196, a radar sensor 197, or a position sensor 198.

The input device 110 may include a physical button or pad for button input or touch input.

Meanwhile, the input device 110 may include a microphone (not shown) for user voice input.

The transceiver 120 may wirelessly exchange data with a mobile terminal 800 or a server 900.

In particular, the transceiver 120 may wirelessly exchange data with a mobile terminal of a vehicle driver. Any of various data communication schemes, such as Bluetooth, Wi-Fi, WIFI Direct, and APIX, may be used as a wireless data communication scheme.

The transceiver 120 may receive weather information and road traffic situation information, such as transport protocol expert group (TPEG) information, from the mobile terminal 800 or the server 900. To this end, the transceiver 120 may include a mobile communication module (not shown).

The plurality of zone Electronic control devices EM1 to EM4 may receive sensor information and the like from an electronic control device (ECU) 770 or a sensor device 760, and may transmit the received information to the signal processing device 170.

Here, the sensor information may include at least one of vehicle direction information, vehicle position information (global positioning system (GPS) information), vehicle angle information, vehicle velocity information, vehicle acceleration information, vehicle inclination information, vehicle forward/backward movement information, battery information, fuel information, tire information, vehicle lamp information, in-vehicle temperature information, and in-vehicle humidity information.

The sensor information may be acquired from a heading sensor, a yaw sensor, a gyro sensor, a position sensor, a vehicle forward/backward movement sensor, a wheel sensor, a vehicle velocity sensor, a car body inclination sensor, a battery sensor, a fuel sensor, a tire sensor, a steering-wheel-rotation-based steering sensor, an in-vehicle temperature sensor, or an in-vehicle humidity sensor.

Meanwhile, the position module may include a GPS module configured to receive GPS information or a position sensor 198.

Meanwhile, at least one of the plurality of zone Electronic control devices EM1 to EM4 may transmit wheel speed sensor data, sensed by a wheel speed sensor (not shown), to the signal processing device 170.

Meanwhile, at least one of the plurality of zone Electronic control devices EM1 to EM4 may transmit position information data, sensed by the GPS module or the position sensor 198, to the signal processing device 170.

Meanwhile, at least one of the plurality of zone Electronic control devices EM1 to EM4 may receive front-of-vehicle image data, side-of-vehicle image data, rear-of-vehicle image data, obstacle-around-vehicle distance information, and the like from the camera 195, the lidar sensor 196, or the radar sensor 197, and may transmit the received information to the signal processing device 170.

The memory 140 may store various data necessary for overall operation of the vehicle display apparatus 100, such as programs for processing or control of the signal processing device 170.

For example, the memory 140 may store data about the hypervisor and first to third virtual machines executed by the hypervisor in the processor 175.

The audio output device 185 may convert an electrical signal from the signal processing device 170 into an audio signal, and may output the audio signal. To this end, the audio output device 185 may include a speaker.

The power supply 190 may supply power necessary to operate components under control of the signal processing device 170. In particular, the power supply 190 may receive power from a battery in the vehicle.

The signal processing device 170 may control overall operation of each device in the vehicle display apparatus 100.

For example, the signal processing device 170 may include a processor 175 configured to perform signal processing for the vehicle displays 180a and 180b.

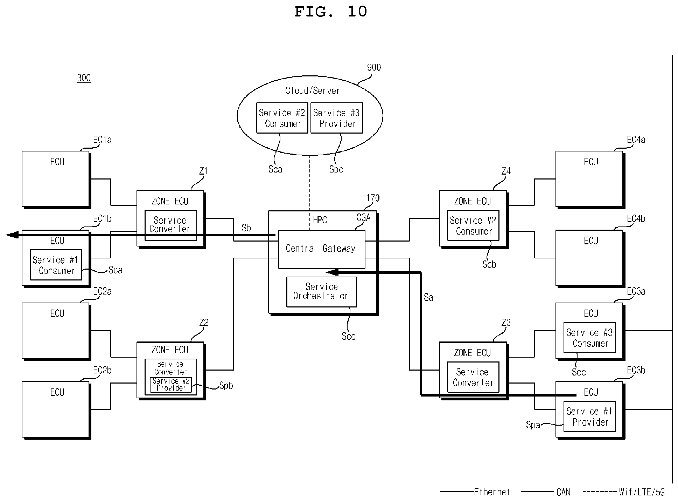

The processor 175 may execute the first to third virtual machines (not shown) on the hypervisor 505 (see FIG. 10) in the processor 175.

Among the first to third virtual machines (not shown), the first virtual machine (not shown) may be called a server virtual machine, and the second and third virtual machines (not shown) may be called guest virtual machines.

In this case, the second virtual machine (not shown) may operate for the first display 180a, and the third virtual machine (not shown) may operate for the second display 180b.

For example, the first virtual machine (not shown) in the processor 175 may receive sensor data from the plurality of sensor devices, such as vehicle sensor data, position information data, camera image data, audio data, or touch input data, and may process and output the received sensor data.

As described above, the first virtual machine (not shown) may process most of the data, whereby 1:N data sharing may be achieved.

In another example, the first virtual machine (not shown) may directly receive and process CAN communication data, audio data, radio data, USB data, and wireless communication data for the second and third virtual machines (not shown).

Further, the first virtual machine (not shown) may transmit the processed data to the second and third virtual machines (not shown).

Accordingly, only the first virtual machine (not shown), among the first to third virtual machines (not shown), may receive sensor data from the plurality of sensor devices, communication data, or external input data, and may perform signal processing, whereby load in signal processing by the other virtual machines may be reduced and 1:N data communication may be achieved, and therefore synchronization at the time of data sharing may be achieved.

Meanwhile, the first virtual machine (not shown) may be configured to write data in the shared memory 508, whereby the second virtual machine (not shown) and the third virtual machine (not shown) share the same data.

For example, the first virtual machine (not shown) may be configured to write vehicle sensor data, the position information data, the camera image data, or the touch input data in the shared memory 508, whereby the second virtual machine (not shown) and the third virtual machine (not shown) share the same data. Consequently, 1:N data sharing may be achieved.

Eventually, the first virtual machine (not shown) may process most of the data, whereby 1:N data sharing may be achieved.

Meanwhile, the first virtual machine (not shown) in the processor 175 may be configured to set the shared memory 508 based on the hypervisor 505 in order to transmit the same data to the second virtual machine (not shown) and the third virtual machine (not shown).

That is, the first virtual machine (not shown) in the processor 175 may transmit the same data to the second virtual machine (not shown) and the third virtual machine (not shown) in a synchronized manner by using the shared memory (not shown) based on the hypervisor (not shown). Accordingly, the plurality of displays 180a and 180d in the vehicle may display the same image in a synchronized manner.

Meanwhile, the signal processing device 170 may process various signals, such as an audio signal, an image signal, a data signal, and the like. To this end, the signal processing device 170 may be implemented in the form of a system on chip (SOC) .

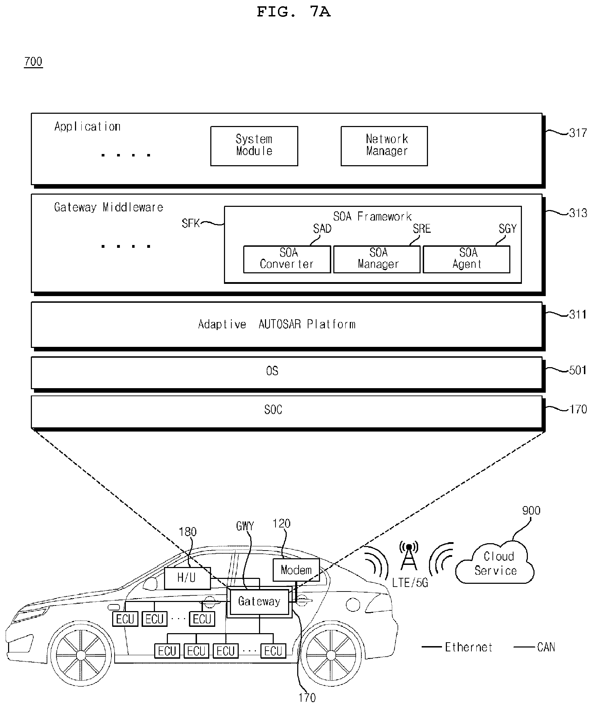

FIG. 7A is a diagram illustrating an example of a system operating on a vehicle communication device in a vehicle associated with the present disclosure.

Referring to the drawing, a gateway GWY of the vehicle communication device in a vehicle associated with the present disclosure may receive data from the transceiver 120 which performs mobile communication with a cloud server 900 and the like, or may transmit data to the transceiver 120, and the display 180 may display information related to the received data.

Meanwhile, a system 700 operating on the vehicle communication device in the vehicle associated with the present disclosure may include: an operating system 501 running on the signal processing device 170; an adaptive AUTOSAR platform 311 running on the operating system; a gateway middleware 313 running on the AUTOSAR platform 311; and an application 317 running on the gateway middleware 313.

The gateway middleware 313 may include a Service Oriented Architecture (SOA) framework 313 for providing services to the plurality of electronic control devices.

Meanwhile, the SOA framework 313 may include an SOA converter SAD, an SOA manager SRE, and an SOA agent SGY.

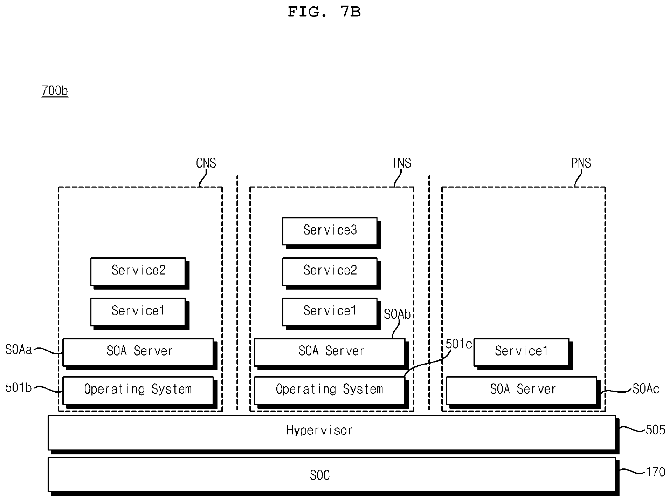

FIG. 7B is a diagram illustrating another example of a system operating on the vehicle communication device in the vehicle associated with the present disclosure.

Referring to the drawing, a system 700b operating on the vehicle communication device in the vehicle associated with the present disclosure may include: a hypervisor (not shown) running on the signal processing device 170; and a first network server CNS, a second network server INS, and a third network server PNS which run on the hypervisor (not shown).

The first network server CNS, which is a convenience network server, may run an SOA server SOAa on an operating system 501b and may execute a plurality of services on the SOA server SOAa.

The second network server INS, which is an instrument network server, may run an SOA server SOAb on an operating system 501c and may execute a plurality of services on the SOA server SOAb.

The third network server PNS, which is a powertrain network server, may run an SOA server SOAc and may execute at least one service on the SOA server SOAc.

However, as illustrated in FIG. 7B, the plurality of network servers CNS, INS, and PNS separately run their own operating systems or SOA servers SOAa and SOAb, such that every time a service is added or changed, it is cumbersome for the respective SOA servers to redefine the service and update software.

Accordingly, the present disclosure proposes a vehicle communication device capable of dynamically controlling data which may be provided between the plurality of electronic control devices, and capable of providing services without need to redefine the services or to add or change software, which will be described later with reference to FIG. 8 and the following figures.

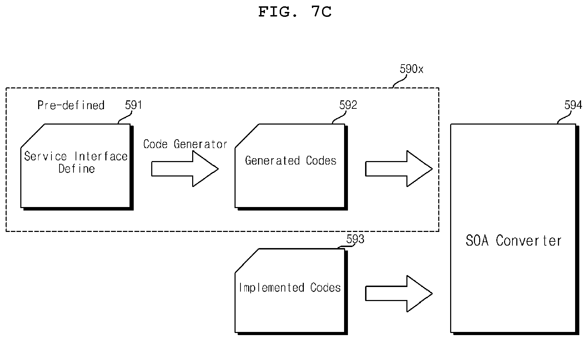

FIG. 7C is a diagram illustrating an example of providing data to the SOA converter.

Referring to the drawing, each of a fixed data 590x and an implemented data 593 may be provided in parallel to an SOA converter 594.

Meanwhile, the fixed data 590x may include a coded data 92 which is coded based on a service interface data 591.

The method of providing data illustrated in FIG. 7C has a drawback in that the fixed data 590x is provided to the SOA converter 594 based on a configuration, such that the data is not configurable.

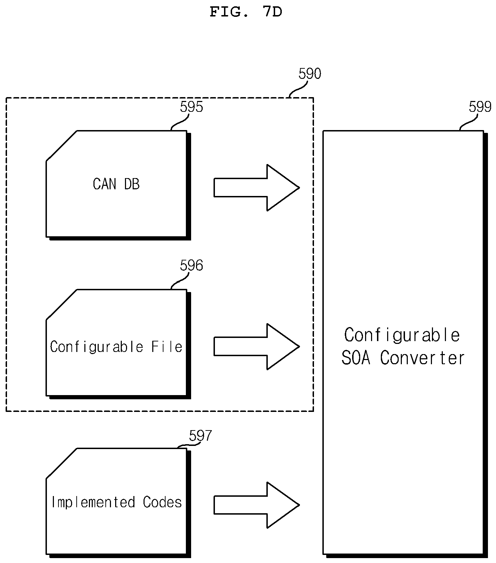

FIG. 7D is a diagram illustrating another example of providing data to the SOA converter.

Referring to the drawing, each of a configurable data 590 and an implemented data 597 may be provided in parallel to an SOA converter 599.

Meanwhile, the configurable data 590 may include data based on CAN communication and a configurable file data 596.

Each of the data 595 based on CAN communication and the configurable file data 596 may be provided in parallel to the SOA converter 594.

In the method of providing data illustrated in FIG. 7D, data is configurable when the data is provided, such that the fixed data 590x is provided to the SOA converter 594 in a configurable manner, thereby dynamically controlling data which may be provided between the plurality of electronic control devices.

Accordingly, the vehicle communication device according to the embodiment of the present disclosure employs the method of providing data illustrated in FIG. 7D.

FIG. 8 is a block diagram illustrating a vehicle communication device according to an embodiment of the present disclosure.

Referring to the drawing, the vehicle communication device 300 according to an embodiment of the present disclosure includes a gateway CGA and a service orchestrator Sco. Particularly, the signal processing device 170 in the vehicle communication device 300 may include the gateway CGA and the service orchestrator Sco.

The gateway CGA may perform data communication with the plurality of zone Electronic control devices Z1 to Z4 based on the first communication scheme. Accordingly, the gateway CGA may be referred to as a central gateway. In this case, the first communication scheme may be Ethernet communication.

Meanwhile, the plurality of zone Electronic control devices Z1 to Z4 may include their own service converter (service adapter).

Particularly, in the method of providing data illustrated in FIG. 7D, the service converter in each of the plurality of zone Electronic control devices Z1 to Z4 may be configurable when data is provided, such that data which may be provided between the plurality of electronic control devices EC1a to EC4b and Z1 to Z4 may be dynamically controlled.

In the drawing, an example is illustrated in which two Electronic control devices EC1a and EC1b are connected to the first zone electronic control device Z1, two Electronic control devices EC2a and EC2b are connected to the second zone electronic control device Z2, two Electronic control devices EC3a and EC3b are connected to the third zone electronic control device Z3, and two Electronic control devices EC4a and EC4b are connected to the fourth zone electronic control device Z4, among the plurality of zone Electronic control devices Z1 to Z4.

Meanwhile, the two Electronic control devices EC3a and EC3b connected to the third zone electronic control device Z3 may receive data sensed by an external sensor device SN by using the second communication scheme which is slower than the first communication scheme. In this case, the second communication scheme may be CAN communication.

Meanwhile, the plurality of zone Electronic control devices Z1 to Z4 may exchange data with the respective Electronic control devices EC1a to EC4b based on the first communication scheme.

Meanwhile, the gateway CGA may perform data communication with a cloud or a server 900 based on the first communication scheme which is wired communication and a third communication scheme which is wireless communication and different from the second communication scheme. In this case, the third communication scheme may be Wi-Fi, LTE, or 5G communication.

The service orchestrator Sco may transmit data, provided by the third zone electronic control device Z3 which is a service provider, to the first zone electronic control device Z1 which is a service consumer, among the plurality of zone Electronic control devices Z1 to Z4.

For example, as illustrated in FIG. 8, if the first electronic control device EC1b connected to the first zone electronic control device Z1 transmits a service request or a necessary service list, the service orchestrator Sco receives the service request or the service list; and upon receiving a list of available services from the second electronic control device EC3b connected to the third zone electronic control device Z3, the service orchestrator Sco may transmit the services from the second electronic control device EC3b to the first electronic control device EC1b. Accordingly, data which may be provided between the plurality of electronic control devices EC1a to EC4b may be dynamically controlled.

Meanwhile, the necessary service list may include necessary service information, service converter ID information, service consumer ID information, IP information, configuration file version information, and the like. In this case, the service converter may correspond to a zone electronic control device to which a service consumer is connected.

Meanwhile, the service request or the service list may include available service information, service converter ID information, service provider ID information, IP information, configuration file version information, and the like. In this case, the service converter may correspond to a zone electronic control device to which a service provider is connected.

Specifically, the service orchestrator Sco may receive a request for information from the first electronic control device EC1b connected to the first zone electronic control device Z1; and upon receiving information from the second electronic control device EC3b connected to the third zone electronic control device Z3, the service orchestrator Sco may transmit endpoint information to the first electronic control device EC1b.

Meanwhile, the service orchestrator Sco may include a Service Oriented Architecture (SOA) converter for transmitting the endpoint information in a configuration file format or in a stream format. For example, the service orchestrator Sco may include the converter 599 as illustrated in FIG. 7D, thereby stably providing data by using the configuration file 596.

Meanwhile, the second electronic control device EC3b may directly transmit information based on the endpoint information.

In response, the first electronic control device EC1b may directly receive information based on the endpoint information.

Accordingly, data which may be provided between the first electronic control device EC1b and the second electronic control device EC3b may be dynamically controlled.

Meanwhile, in the request for information, the information may be vehicle speed data or camera data, or radar data or lidar data.

For example, the service orchestrator Sco may receive a request for vehicle speed data from the first electronic control device EC1b connected to the first zone electronic control device Z1; and upon receiving vehicle speed data from the second electronic control device EC3b connected to the second zone electronic control device Z3, the service orchestrator Sco may transmit the endpoint information to the first electronic control device EC1b. Accordingly, data which may be provided between the first electronic control device EC1b and the second electronic control device EC3b may be dynamically controlled.

Meanwhile, upon receiving a request for camera data, radar data, or lidar data from the first electronic control device EC1b connected to the first zone electronic control device Z1, and upon receiving the camera data, the radar data, or the lidar data from the second electronic control device EC3b connected to the second zone electronic control device Z3, the service orchestrator Sco may transmit the endpoint information to the first electronic control device EC1b. Accordingly, the camera data, the radar data, or the lidar data which may be provided between the first electronic control device EC1b and the second electronic control device EC3b may be dynamically controlled.

Meanwhile, the service orchestrator Sco may monitor whether the second electronic control device EC3b periodically provides information or data to the first electronic control device EC1b. Accordingly, data which may be provided between the plurality of electronic control devices EC1b and EC3b may be dynamically controlled.

Meanwhile, the service orchestrator Sco may manage network configuration for the plurality of zone Electronic control devices Z1 to Z4. For example, the service orchestrator Sco may manage IP configuration and port configuration for the plurality of zone Electronic control devices Z1 to Z4.

Meanwhile, the service orchestrator Sco may manage network configuration for the plurality of electronic control devices EC1a to EC4b. For example, the service orchestrator Sco may manage IP configuration and port configuration for the plurality of electronic control devices EC1a to EC4b. Accordingly, the service orchestrator Sco may simply manage network configuration between the plurality of electronic control devices EC1a to EC4b.

Meanwhile, the service orchestrator Sco may dynamically control services which are necessary or available between a service provider and a service consumer in the plurality of zone Electronic control devices Z1 to Z4, or may scan and adjust all the services within a network domain, and provide a new or changed service.

Particularly, unlike the system 700b of FIG. 7B, the plurality of network servers CNS, INS, and are PNS not required to separately run the SOA server and the like, such that data which may be provided between the plurality of electronic control devices EC1a to EC4b may be dynamically controlled. In addition, by scanning and adjusting all the services within the network domain, a new or changed service may be provided. Further, services may be provided without having to redefine the services or to add or change software.

Meanwhile, the service orchestrator Sco may transmit a first configuration file to the first electronic control device EC1b and to transmit a second configuration file to any one of the plurality of electronic control devices EC1a to EC4b.

For example, the service orchestrator Sco may transmit the first configuration file to the first electronic control device EC1b and to transmit the second configuration file to the second electronic control device EC3b, thereby stably providing data by using the configuration files.

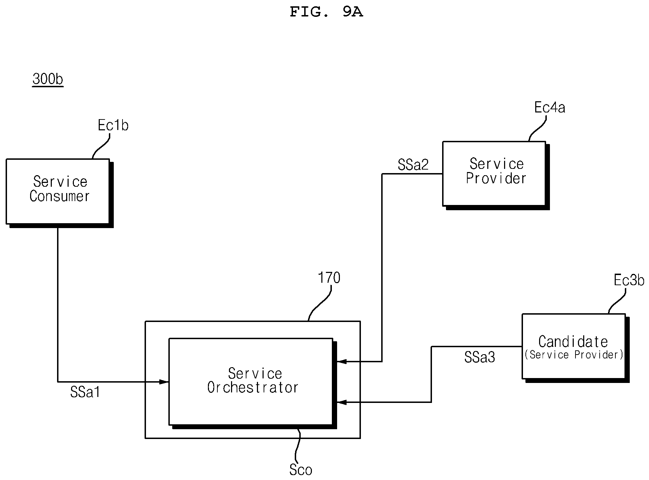

FIGS. 9A to 11D are diagrams referred to in the description of FIG. 8.

FIG. 9A is a diagram illustrating an example in which the service orchestrator Sco receives available service lists from the plurality of electronic control devices EC3b and EC4a.

Referring to the drawing, the service orchestrator Sco in the signal processing device 170 may receive a necessary service list SSa1 from the first electronic control device EC1b and may receive available service lists SSa2 and SSa3 from the plurality of electronic control devices EC3b and EC4a, respectively.

Upon receiving the available service lists SSa2 and SSa3 from the plurality of electronic control devices EC3b and EC4a, respectively, the service orchestrator Sco in the signal processing device 170 may transmit a service from any one of the plurality of electronic control devices EC3b and EC4a to the first electronic control device EC1b.

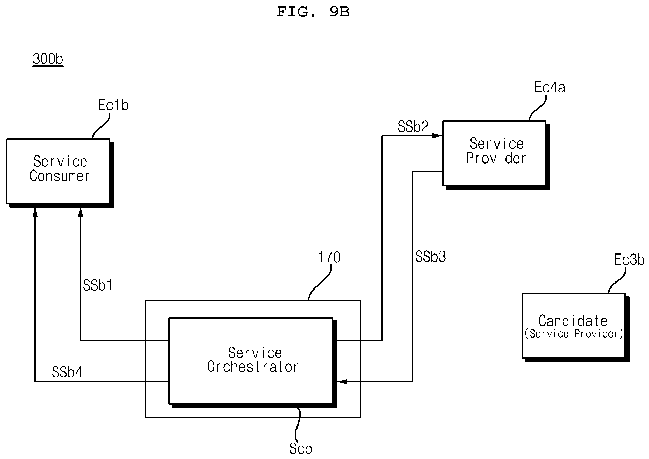

FIG. 9B is a diagram illustrating an example in which, of the second electronic control device EC3b and the third ECU EC4a, the third ECU EC4a is selected as a candidate.

Accordingly, the service orchestrator Sco is configured to transmit the first configuration file SSb2 to the third ECU EC4a and to transmit the second configuration file SSb1 to the first electronic control device EC1b.

Accordingly, a service SSb3 provided by the third ECU EC4a may be transmitted to the first electronic control device EC1b through the service orchestrator Sco or a gateway CGW.

In this case, the service orchestrator Sco may process the service SSb3 provided by the third ECU EC4a and may transmit the processed service SSb4 to the first electronic control device EClb, thereby dynamically controlling data which may be provided between the plurality of electronic control devices EC1b and EC4a.

Alternatively, the fourth zone electronic control device Z4 connected to the third ECU EC4a may process information SSb3 received from the third ECU EC4a and may transmit the processed information SSb4 to the first electronic control device EClb, thereby dynamically controlling data which may be provided between the plurality of electronic control devices EC1b and EC4a.

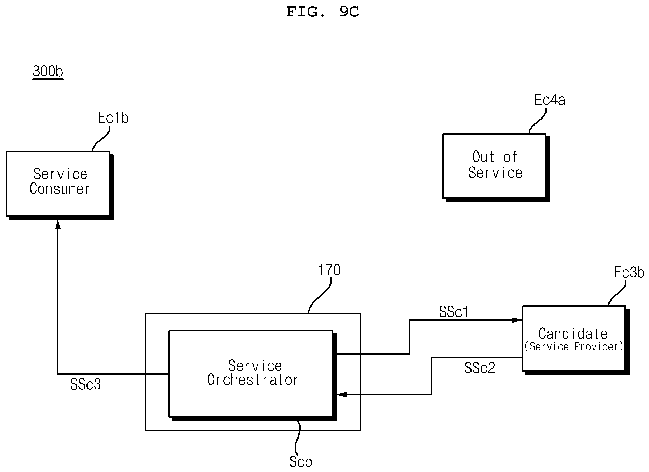

Meanwhile, if a service provided by any one of the plurality of electronic control devices EC1a to EC4b is terminated, the service orchestrator Sco may transmit a service provided by another one of the plurality of electronic control devices EC1a to EC4b to the first electronic control device EClb, which will be described below with reference to FIG. 9C.

FIG. 9C is a diagram illustrating an example in which a service, provided by the third ECU EC4a, is terminated.

Referring to the drawing, if the service provided by the third ECU EC4a is terminated, the service orchestrator Sco may transmit a configuration file SSc1 to the second electronic control device EC3b.

Then, a service SSc2, provided by the second electronic control device EC3b, may be transmitted to the first electronic control device EC1b through the service orchestrator Sco or the gateway CGW. Accordingly, data which may be provided between the plurality of electronic control devices EC1a to EC4b may be dynamically controlled. Further, services may be provided without having to redefine the services or to add or change software.

FIG. 10 is a diagram illustrating an example of transmitting a service, provided by the second electronic control device EC3b, to the first electronic control device EC1b.

Referring to the drawing, a service Sa from the second electronic control device EC3b may be transmitted to the third zone electronic control device Z3 and the gateway CGA in the signal processing device 170, and a gateway VGW may transmit a service Sab from the second electronic control device EC3b to the first zone electronic control device Z1 and the first electronic control device unit EClb, thereby dynamically controlling data which may be provided between the plurality of electronic control devices EC3b and EC1b.

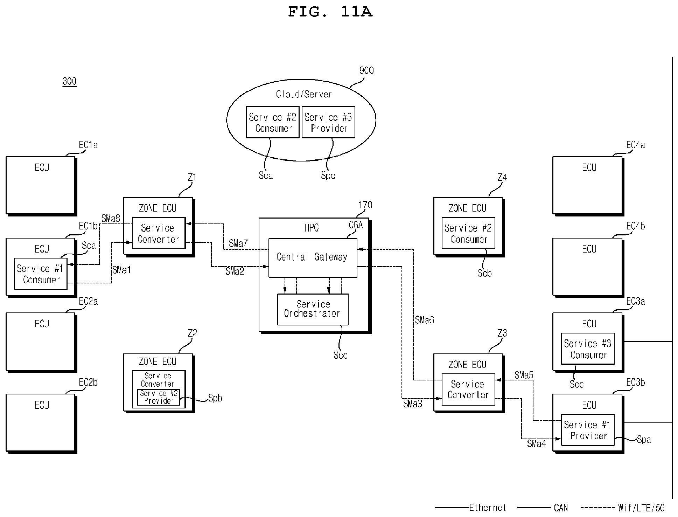

FIGS. 11A to 11D are diagrams referred to in the description of FIG. 10.

FIG. 11A is a diagram illustrating an example of service discovery.

Referring to the drawing, the first electronic control device EC1b transmits a necessary service list to the first zone electronic control device Z1 based on the first communication scheme (SMa1), and the first zone electronic control device Z1 transmits the necessary service list to the gateway CGA based on the first communication scheme (SMa2).

Meanwhile, the gateway CGA transmits a request for an available service list to the third zone electronic control device Z3 based on the first communication scheme (SMa3), and the third zone electronic control device Z3 transmits a request for an available service list to the second electronic control device EC3b based on the first communication scheme (SMa4).

In response, the second electronic control device EC3b transmits an available service list SM5 to the third zone electronic control device Z3 based on the first communication scheme (SMa5).

In this case, the available service list SM5, which is in a configuration file format, may be transmitted along with version information and the like.

Then, the third zone electronic control device Z3 transmits an available service list to the gateway CGA based on the first communication scheme (SMa6), and the gateway CGA transmits an available service list to the second zone electronic control device Z2 based on the first communication scheme (SMa7).

As a result, the first electronic control device EC1b receives an available service list SM8 from the second zone electronic control device Z2 based on the first communication scheme (SMa8).

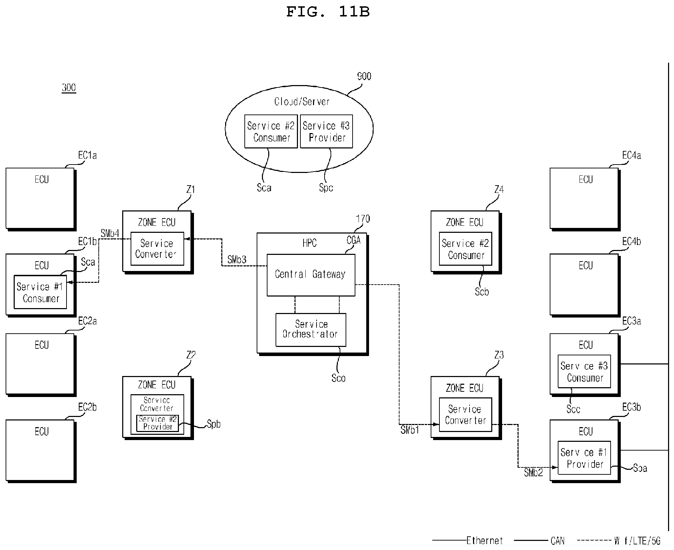

FIG. 11B is a diagram illustrating an example of service orchestration.

Referring to the drawing, the service orchestrator Sco generates configuration files for each of a service provider and a service consumer.

Then, the gateway CGA transmits a generated first configuration file to the third zone electronic control device Z3 based on the first communication scheme (SMb1).

Then, the third zone electronic control device Z3 transmits the first configuration file to the second electronic control device EC3b, which is a service provider, based on the first communication scheme (SMb2).

Meanwhile, the gateway CGA transmits a generated second configuration file to the first zone electronic control device Z1 based on the first communication scheme (SMb3).

Then, the first zone electronic control device Z1 transmits the second configuration file to the first electronic control device EClb, which is a service consumer, based on the first communication scheme (SMb4).

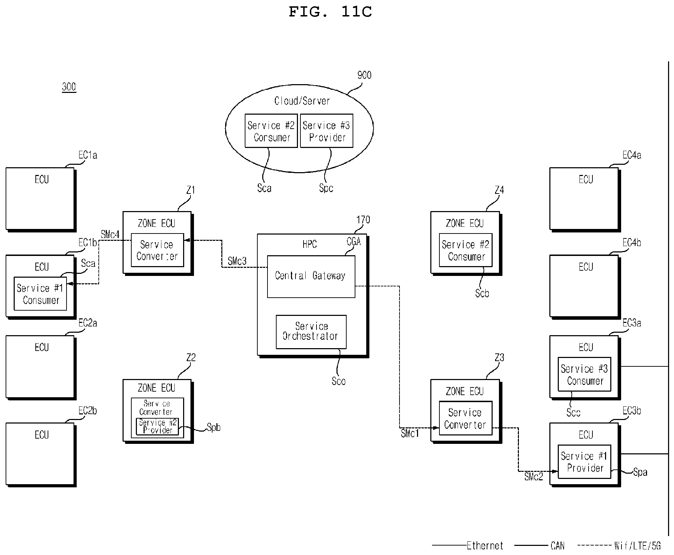

FIG. 11C is a diagram illustrating an example of service connection.

Referring to the drawing, the service orchestrator Sco is configured to transmit network configuration files for each of a service provider and a service consumer.

That is, the gateway CGA transmits a first network configuration file to the third zone electronic control device Z3 based on the first communication scheme (SMc1).

Then, the third zone electronic control device Z3 transmits the first network configuration file to the second electronic control device EC3b, which is a service provider, based on the first communication scheme (SMc2).

In this case, the first network configuration file may include network information, ID information, and the like of the first electronic control device EC1b. Meanwhile, the network information may include IP information, port information, and the like.

Meanwhile, the gateway CGA transmits a second network configuration file to the first zone electronic control device Z1 based on the first communication scheme (SMc3).

Then, the first zone electronic control device Z1 transmits the second network configuration file to the first electronic control device EClb, which is a service consumer, based on the first communication scheme (SMc4).

In this case, the second network configuration file may include network information, ID information, and the like of the second electronic control device EC3b.

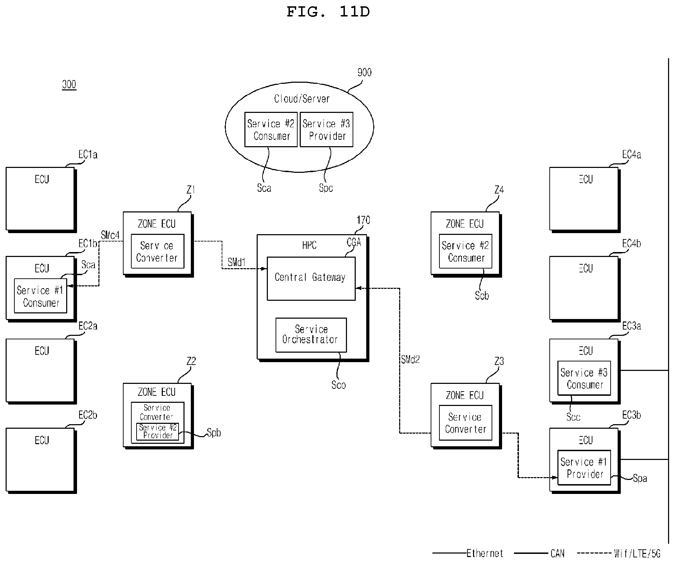

FIG. 11D is a diagram illustrating an example of service communication.

Referring to the drawing, the first zone electronic control device Z1 may provide first service communication information to the gateway CGA (SMd1).

Meanwhile, the third zone electronic control device Z3 may provide second service communication information to the gateway CGA (SMd2).

Meanwhile, the third zone electronic control device Z3 may provide the second service communication information to the second electronic control device EC3b (SMd3).

Meanwhile, the first zone electronic control device Z1 may provide the first service communication information to the gateway CGA (SMd4).

It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A vehicle communication device comprising:
a gateway configured to perform data communication with a plurality of zone electronic control devices, based on a first communication scheme; and
a service orchestrator configured to transmit data provided by a first zone electronic control device, which is a service provider, among the plurality of zone electronic control devices to a second zone electronic control device, which is a service consumer.

2. The vehicle communication device of claim 1, wherein in response to receiving a necessary service list from a first electronic control device and an available service list from a plurality of electronic control devices, the service orchestrator is configured to transmit a service, provided by any one of the plurality of electronic control devices, to the first electronic control device.

3. The vehicle communication device of claim 2, wherein the service orchestrator is configured to transmit a first configuration file to the first electronic control device, and transmit a second configuration file to any one of the plurality of electronic control devices.

4. The vehicle communication device of claim 2, wherein in response to a service, provided by any one of the electronic control devices, being terminated, the service orchestrator is configured to transmit a service, provided by another one of the plurality of electronic control devices, to the first electronic control device.

5. The vehicle communication device of claim 1, wherein in response to receiving a request for information from the first electronic control device connected to the first zone electronic control device, and receiving information from the second electronic control device connected to the second zone electronic control device, the service orchestrator is configured to transmit endpoint information to the first electronic control device.

6. The vehicle communication device of claim 5, wherein the service orchestrator comprises a Service Oriented Architecture (SOA) converter configured to transmit the endpoint information in a configuration file format or in a stream format.

7. The vehicle communication device of claim 5, wherein the first electronic control device directly receives the information based on the endpoint information.

8. The vehicle communication device of claim 5, wherein the service orchestrator is configured to monitor whether the second electronic control device periodically provides the information or data to the first electronic control device.

9. The vehicle communication device of claim 5, wherein the information comprises vehicle speed data or camera data.

10. The vehicle communication device of claim 5, wherein the second zone electronic control device is configured to process information received from the second electronic control device and transmit the processed information to the first electronic control device.

11. The vehicle communication device of claim 5, wherein the second electronic control device is configured to receive the information from a sensor device based on a second communication scheme, and transmit the received information to the second zone electronic control device based on the first communication scheme which is faster than the second communication scheme,
wherein the second zone electronic control device is configured to transmit the received information to the gateway based on the first communication scheme.

12. The vehicle communication device of claim 11, wherein the gateway performs data communication with a cloud or server based on a third communication scheme which is a wireless communication scheme and is different from the first and second communication schemes which are wired communication schemes.

13. The vehicle communication device of claim 1, wherein the service orchestrator is configured to manage network configuration for the plurality of zone electronic control devices.

14. The vehicle communication device of claim 1, wherein the service orchestrator is configured to:
dynamically control services which are necessary or available between the service provider and the service consumer in the plurality of zone electronic control devices; or
scan and adjust all services within a network domain, and provide a new or changed service.

15. The vehicle communication device of claim 1, wherein in response to receiving vehicle speed data from the second electronic control device connected to the second zone electronic control device, and receiving a request for the vehicle speed data from the first electronic control device connected to the first zone electronic control device, the service orchestrator is configured to transmit the endpoint information to the first electronic control device.

16. The vehicle communication device of claim 1, wherein in response to receiving camera data, radar data, or lidar data from the second electronic control device connected to the second zone electronic control device, and receiving a request for the camera data, radar data, or lidar data from the first electronic control device connected to the first zone electronic control device, the service orchestrator is configured to transmit the endpoint information to the first electronic control device.

17. A vehicle comprising the vehicle communication device of any one of claims 1 to 16.
